# EUROPÄISCHE PATENTANMELDUNG

(11) **EP 2 378 388 A1**
(43) Veröffentlichungstag der Anmeldung: **19.10.2011**
(21) Anmeldenummer: 10159768.0
(22) Anmeldetag: 13.04.2010
(51) Int. Cl.: G06F 1/18, G11B 33/12

(54) **Computer mit einem Gehäuse und einem Speicherlaufwerk**

(71) Anmelder: SIEMENS AKTIENGESELLSCHAFT, 80333 München (DE)
(72) Erfinder: Pioth, Roland, 76275 Ettlingen (DE)

(57) **Zusammenfassung**

Es wird ein Computer mit einem Gehäuse (1), einem Speicherlaufwerk (5) und einem Laufwerksträger (4) zur Aufnahme und Halterung des Speicherlaufwerks (5) vorgeschlagen, in welchem eine einfache Montage des Speicherlaufwerks (5) und des Laufwerkträgers (4) ermöglicht wird. Dazu ist vorgesehen, dass der Laufwerksträger (4) eine Tragplatte (4) ist, die an zwei gegenüberliegenden Seiten jeweils eine Leiste (7) aufweist, dass das Gehäuse (1) mit einer Einschuböffnung (3) und mit zu den Leisten (7) korrespondierenden Nuten (14) zum Einschieben der Tragplatte (4) in die Nuten (14) versehen ist und dass die Tragplatte (4) eine Blende (10) zur Abdeckung der Einschuböffnung (3) aufweist.

## Beschreibung

### Computer mit einem Gehäuse und einem Speicherlaufwerk

Die Erfindung betrifft einen Computer mit einem Gehäuse, einem Speicherlaufwerk und einem Laufwerksträger zur Aufnahme und Halterung des Speicherlaufwerks.

Derartige Computer sind in vielfältiger Form - beispielsweise aus dem Siemens-Katalog ST 70, Seite 7/2, Ausgabe 2009 - bekannt. Diese weisen gewöhnlich einen käfigförmigen Laufwerksträger zur Aufnahme und Halterung eines Speicherlaufwerks auf, wobei zum Ein- oder Ausbau des Laufwerkträgers das Computergehäuse geöffnet werden muss und dadurch die Computerelektronik aufgrund elektrostatischer Entladung beschädigt werden kann.

Der vorliegenden Erfindung liegt die Aufgabe zugrunde, einen Computer der eingangs genannten Art zu schaffen, in welchem eine einfache Montage des Speicherlaufwerks und des Laufwerkträgers ermöglicht wird.

Diese Aufgabe wird dadurch gelöst, dass der Laufwerksträger eine Tragplatte ist, die an zwei gegenüberliegenden Seiten jeweils eine Leiste aufweist, dass das Gehäuse mit einer Einschuböffnung und mit zu den Leisten korrespondierenden Nuten zum Einschieben der Tragplatte in die Nuten versehen ist und dass die Tragplatte eine Blende zur Abdeckung der Einschuböffnung aufweist.

Unter dem Begriff "Leiste" wird der Randbereich der Tragplatte verstanden, der zum Einschieben der Tragplatte in eine dazu korrespondierende Nut des Computergehäuses geeignet ist. Dieser Randbereich kann eine bereits in geeigneter Form vorhandene Kante der Tragplatte, ein angeformter Bereich der Tragplatte oder eine an der Tragplatte befestigte separate Leiste sein.

Vorteilhaft ist, dass sowohl der Laufwerksträger als auch das Speicherlaufwerk leicht ein- bzw. ausgebaut werden kann, wobei mittels der Blende die Tragplatte leicht in das Computergehäuse eingeschoben bzw. herausgezogen werden kann.

In einer Ausgestaltung der Erfindung ist die Blende an der Tragplatte schwenkbar gelagert. Dadurch kann die Blende in eine Stellung gebracht werden, in der ein Einschieben bzw. Herausziehen der Tragplatte weiter vereinfacht wird.

In einer weiteren Ausgestaltung der Erfindung ist bei eingeschobener Tragplatte die Blende am Gehäuse z. B. durch Verschraubung mechanisch verbindbar, wodurch sichergestellt ist, dass die Tragplatte und das Speicherlaufwerk gesichert sind und korrekt im Computergehäuse positioniert bleiben.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in perspektivischer Ansicht:
- Figur 1: einen Ausschnitt eines Computers,
- Figur 2: einen Laufwerksträger,
- Figur 3: einen Laufwerksträger und ein Speicherlaufwerk,
- Figur 4: einen Laufwerksträger und ein Speicherlaufwerk in einem Gehäuse und
- Figur 5: einen weiteren Ausschnitt eines Computers.

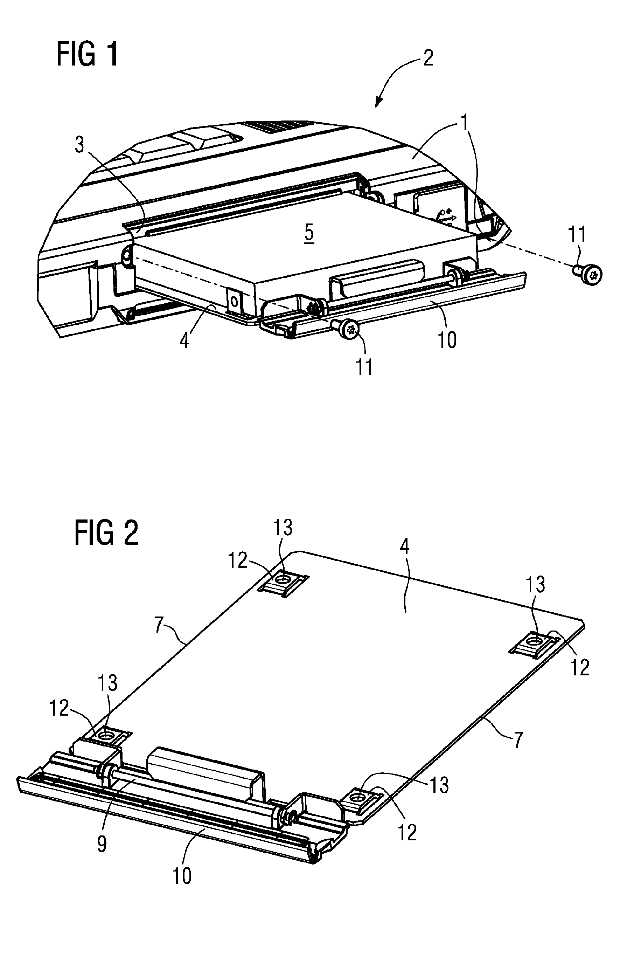

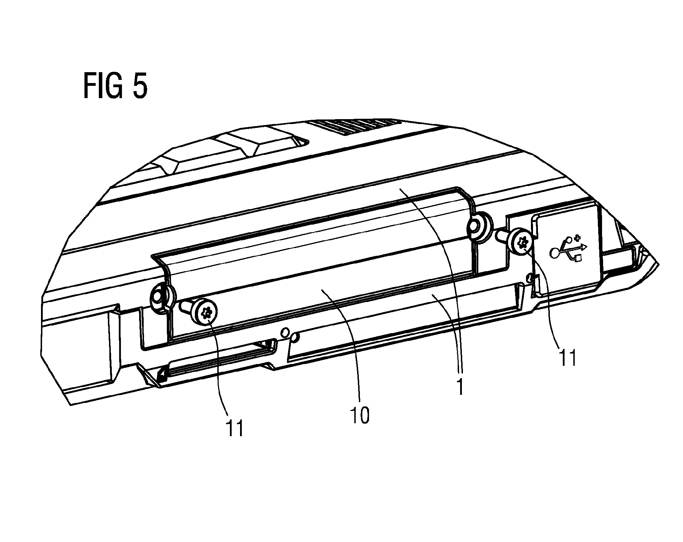

Die in den Figuren 1 bis 5 gleichen Teile sind mit gleichen Bezugszeichen versehen.

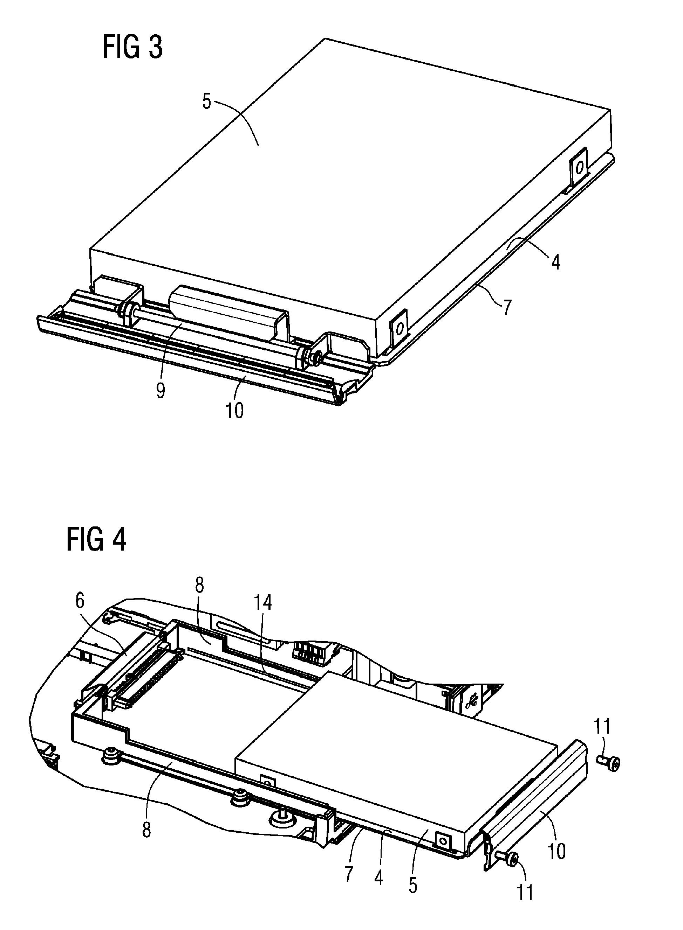

Figur 1 zeigt ein Gehäuse 1 eines Computers, beispielsweise eines Computers in Form eines Industrie-Notebooks 2, wobei das Gehäuse 1 eine Öffnung 3 zum Einschieben einer Tragplatte 4 und eines auf der Tragplatte 4 montierten Speicherlaufwerkes 5 aufweist. Das Speicherlaufwerk 5 ist z. B. als eine so genannte 2,5" Sata-Festplatte ausgebildet, welche mit hier nicht dargestellten Steckverbindern zum Anschließen an zu diesen Steckverbindern korrespondierenden Anschlüssen 6 im Gehäuse 1 (Figur 4) versehen ist. Zwei gegenüberliegende Leisten der Tragplatte 4, im vorliegenden Ausführungsbeispiel Leisten in Form von Kanten 7 der Tragplatte 4 (Figur 2), sind zum Einschieben der Tragplatte 4 in zu diesen Kanten 7 korrespondierende Nuten 14 von Führungsschienen 8 im Gehäuse 1 vorgesehen (Figur 4). Die Tragplatte 4 weist eine um eine Achse 9 schwenkbar gelagerte Blende 10 auf (Figur 3), welche insbesondere als "Zughilfe" zum Herausziehen bzw. zum Entfernen der Tragplatte 4 oder des auf dieser Tragplatte 4 montierten Speicherlaufwerks 5 aus dem Gehäuse 1 vorgesehen ist. Für den Fall, dass die Tragplatte 4 in das Gehäuse 1 eingeschoben ist, kann mittels der Blende 10 die Gehäuseöffnung 3 abgedeckt werden, wobei zur Sicherung der Tragplatte 4 bzw. des Speicherlaufwerks 5 die Blende 10 mittels Schrauben 11 mit dem Gehäuse 1 verschraubt werden kann. Das Speicherlaufwerk 5 kann in einfacher Weise z. B. mittels Schrauben auf der Tragplatte 4 befestigt werden, wobei dazu Erhebungen 12 der Tragplatte 4 mit Bohrlöchern 13 versehen sind (Figur 2).

## Patentansprüche

1. Computer mit einem Gehäuse (1), einem Speicherlaufwerk (5) und einem Laufwerksträger (4) zur Aufnahme und Halterung des Speicherlaufwerks (5), **dadurch gekennzeichnet,**
- **dass** der Laufwerksträger (4) eine Tragplatte (4) ist, die an zwei gegenüberliegenden Seiten jeweils eine Leiste (7) aufweist,
- **dass** das Gehäuse (1) mit einer Einschuböffnung (3) und mit zu den Leisten (7) korrespondierenden Nuten (14) zum Einschieben der Tragplatte (4) in die Nuten (14) versehen ist und
- **dass** die Tragplatte (4) eine Blende (10) zur Abdeckung der Einschuböffnung (3) aufweist.

2. Computer nach Anspruch 1, **dadurch gekennzeichnet, dass** die Blende (10) an der Tragplatte (4) schwenkbar gelagert ist.

3. Computer nach Anspruch 1 oder 2, **dadurch gekennzeichnet, dass** bei eingeschobener Tragplatte (4) die Blende (10) am Gehäuse (1) mechanisch verbindbar ist.
